# EUROPÄISCHE PATENTANMELDUNG

(11) **EP 0 703 405 A1**
(43) Veröffentlichungstag der Anmeldung: **27.03.1996**
(21) Anmeldenummer: 95114006.0
(22) Anmeldetag: 06.09.1995
(51) Int. Cl.: F21V 8/00

(54) **Faseroptische Beleuchtungseinrichtung**

(30) Priorität: 21.09.1994 DE 4433741
(71) Anmelder: SIEMENS AKTIENGESELLSCHAFT, D-80333 München (DE)
(72) Erfinder: Elliot, Robert, D-83278 Traunstein (DE)

(57) **Zusammenfassung**

Die faseroptische Beleuchtungseinrichtung umfaßt eine Lichtquelleneinheit (2), bestehend aus einer Lichtquelle (21), einem diese teilweise umfassenden Reflektor (22) sowie einem dem Reflektor zugekehrten Faserkopf (23) und mindestens eine Lichtleitfaser (31), bei der eines ihrer beiden Enden als Lichtaufnahmefläche in den Faserkopf integriert ist und am anderen, entfernten Ende ein Lichtaustrittselement (5) angeordnet ist. Bei Beleuchtungseinrichtungen dieser Art besteht das Problem, das von der Lichtquelle (21) abgestrahlte Licht möglichst optimal zu nutzen, d. h. möglichst ohne Verluste über das Lichtaustrittselement (5) auszustrahlen.

2.2 Dazu ist das Lichtaustrittselement (5) quaderförmig und transluzent ausgebildet, weist eine dem entfernten Ende der Lichtleitfaser (31) zugewandte Grundfläche (51) und dieser in einer Längsachse (50) des Lichtaustrittselementes (5) gegenüberliegend eine total reflektierend ausgebildete, in bezug auf die Längsache geneigte Deckfläche (52) auf, an der in das Lichtaustrittslement (5) eingekoppeltes Licht reflektiert und gerichtet seitlich aus dem Lichtaustrittselement ausgestrahlt wird.

2.3 Bevorzugtes Anwendungsgebiet ist die Innenbeleuchtung, insbesondere Akzentbeleuchtung.

## Beschreibung

Die Erfindung bezieht sich auf eine faseroptische Beleuchtungseinrichtung gemäß dem Oberbegriff des Patentanspruches 1.

Die Übertragung von Licht mittels Lichtleitfasern ist bereits auf einigen Gebieten der Technik durchaus üblich und wird dort mit Vorteil eingesetzt. In der Beleuchtungstechnik selbst wird diese technologische Möglichkeit erst in Ansätzen ausgenutzt. Die bisher in der Beleuchtungstechnik bekannt gewordenen faseroptischen Beleuchtungseinrichtungen bestehen im wesentlichen aus folgenden Komponenten. Mittels eines Transformators wird die übliche Netzspannung auf eine Niedrigspannung zur Versorgung einer Lichtquelle herabgesetzt. Diese Lichtquelle ist in eine Lichtquelleneinheit, meist transportabel, integriert und häufig als Halogenlampe ausgebildet. Um das von der Lichtquelle abgestrahlte Licht zu lenken und auch in einer gewissen Weise aufzubereiten, umfaßt diese Lichtquelleneinheit weiterhin einen Reflektor, der bei hochwertigen faseroptischen Beleuchtungseinrichtungen als Kaltlichtreflektor ausgebildet ist. Diese Eigenschaft des Reflektors bedeutet, daß er für Wärmestrahlung durchlässig ist, so daß der von ihm reflektierte Lichtanteil sogenanntes Kaltlicht ist, das über einen, in bezug auf die Lichtquelle, dem Reflektor gegenüberliegenden Faserkopf in mindestens eine Lichtleitfaser, häufig ein Bündel von Lichtleitfasern möglichst verlustlos eingekoppelt wird.

Diese Lichtleitfasern transportieren das eingekoppelte Licht unter Ausnutzung der Totalreflexion möglichst verlustlos in Längsrichtung jeder Lichtleitfaser. Trotz der angestrebten Totalreflexion sind aufgrund von Mehrfachreflexionen auftretende Lichtverluste unvermeidbar, so daß üblicherweise die Länge der in einen Kunststoffmantel eingebetteten Lichtleitfasern schon aus diesem Grunde begrenzt ist. Wesentliche Verluste treten beim Ein- und Auskoppeln des Lichtes an den beiden Enden der Lichtleitfaser auf. Für die Beleuchtungstechnik spielt es ebenso eine Rolle, daß Lichtleitfasern elektrische Nichtleiter sind und daher auch für explosionsgeschützte Leuchten eingesetzt werden können. Weiterhin sind sie unempfindlich gegenüber starken elektromagnetischen Feldern, was ihren Anwendungsbereich noch erweitert. Andererseits aber ist der über Lichtleitfasern zu übertragende Lichtstrom systembedingt begrenzt, so daß faseroptische Beleuchtungseinrichtungen derzeit nicht für eine Allgemeinbeleuchtung im Innen- oder Außenbereich eingesetzt werden. Lichtleiter ermöglichen aber, relativ intensive Punktlichtquellen nahe an zu beleuchtende Objekte heranzuführen, und sind - sofern sie als Kaltlichtquellen ausgebildet sind - mit besonderem Vorteil bei der Beleuchtung von wärmeempfindlichen Objekten, denen Austrocknung, aber auch Ausbleichung aufgrund von UV-Bestrahlung schaden könnte, mit besonderem Vorteil einzusetzen. Denn auch der UV-Anteil des von der Lichtquelle abgestrahlten Lichtes wird nicht über die Lichtleitfasern transportiert, sondern bereits nach kurzer Wegstrecke in den Lichtleitfasern absorbiert.

Ein Beispiel für einen derartigen Anwendungsfall einer faseroptischen Beleuchtungseinrichtung ist aus der Zeitschrift "LICHT", Nr. 7-8, 1993, Seite 546 bekannt, das exemplarisch demonstriert, wie vorteilhaft sich diese Art von Beleuchtungseinrichtungen unter anderem zur Akzentbeleuchtung unter Ausnutzung der genannten Eigenschaften einsetzen läßt.

Wenn auch die Weiterentwicklung geeigneter Lichtquellentypen dazu beigetragen hat, faseroptische Beleuchtungseinrichtungen nicht nur auf Spezialgebieten, sondern auch in der eigentlichen Beleuchtungstechnik wirtschaftlicher einsetzen zu können und die Entwicklung spezifischer Kaltlichtreflektoren solchen Beleuchtungseinrichtungen weitere Anwendungsmöglichkeiten erschlossen hat, so besteht dennoch weiterhin gerade in diesem Anwendungsbereich das Problem, den Leuchtenwirkungsgrad nochmals entscheidend zu verbessern. Erst dann sind faseroptische Beleuchtungseinrichtungen nicht nur effektheischend als Zierbeleuchtung, sondern auch gezielt für wirtschaftlich geplante, lichttechnisch optimierte Beleuchtungslösungen in größerem Umfang einsetzbar. In dem System von Lichtquelleneinheit, Lichtleitfasern und Lichtaustrittselement sind Ein- und Auskoppelverluste immer noch eine wesentliche Ursache für einen bisher unbefriedigenden Leuchtenwirkungsgrad.

Der vorliegenden Erfindung liegt daher die Aufgabe zugrunde, für eine faseroptische Beleuchtungseinrichtung der eingangs genannten Art eine weitere Ausgestaltung zu schaffen, die es bei herstellungstechnisch vertretbarem Aufwand ermöglicht, an sich beherrschte Technologien ausnutzend, Lichtverluste weiter zu reduzieren und dabei flexibel an unterschiedliche Beleuchtungsaufgaben anpaßbar ist.

Bei einer faseroptischen Beleuchtungseinrichtung der eingangs genannten Art wird diese Aufgabe erfindungsgemäß mit den im Kennzeichen des Patentanspruches 1 beschriebenen Merkmalen gelöst.

Um Auskoppelverluste am entfernten Ende der Lichtleitfaser zu vermeiden, wäre es die einfachste, naheliegende und auch bereits ausgenutzte Möglichkeit, dieses Ende der Lichtleitfaser selbst unmittelbar als freistrahlende Lichtaustrittsfläche zu nutzen. Wegen des geringen Querschnittes dieser Fläche und der Forderung, für Beleuchtungszwecke im Innen- oder Außenbereich einen relativ hohen Lichtstrom über diese Fläche abzustrahlen, treten bei dieser einfachsten Lösung lokal hohe Leuchtdichteunterschiede im Vergleich des leuchtenden Endes der Lichtleitfaser zu ihrer unmittelbaren Umgebung auf. Neben der Tatsache, daß das über die Lichtleitfaser transportierte Licht mit einer undefinierten Lichtverteilung austritt, ist die Folge dieser Abstrahlung häufig eine unerwünschte Direktblendung.

Bei bekannten faseroptischen Beleuchtungseinrichtungen wird dieser Effekt durch ein an das entfernte Ende der Lichtleitfaser angekoppeltes Lichtaustrittselement gemildert. Allerdings kaschiert dieses Lichtleitelement in vielen Anwendungsfallen lediglich das entsprechende entfernte Ende der Lichtleitfaser, weil bekannte Lichtaustrittselemente in Form und Ausgestaltung häufig lediglich ornamentalen Charakter besitzen, die zwar die Lichtaustrittsfläche vergrößern und damit die Leuchtdichte herabsetzen, sonst aber keine weitere reale lichttechnische Funktion erfüllen. Für hochwertige faseroptische Beleuchtungseinrichtungen ist es allerdings auch bekannt, das Lichtaustrittselement funktional als lichtoptisches Element auszugestalten, vorzugsweise in Form einer optischen Linse, die das über die Lichtleitfaser transportierte Licht auffächert bzw. mehr oder minder gebündelt in Richtung der optischen Achse dieser Linse austreten läßt.

Im Gegensatz zu diesen bekannten Lösungen folgt aus der Ausgestaltung des Lichtaustrittselementes gemäß der Erfindung, daß bei erreichbar hohem Transmissionsgrad des vorzugsweise als Kristallkörper ausgebildeten Lichtaustrittselementes, abgesehen von geringen Lichtverlusten, alles über die Lichtleitfaser transportierte Licht gerichtet in einen definierten Raumwinkel austritt, so daß bei zweckmäßig gewählter Anordnung des Lichtaustrittselementes Direktblendung ohne weiteres zu vermeiden ist. Aus allen von der Lichtaustrittsfläche abgewandten Richtungen ist das Lichtaustrittselement aufgrund eines geringen Anteiles vorhandener Streustrahlung höchstens als schwach leuchtend zu erkennen. Damit wird der weitaus überwiegende Lichtstromanteil lediglich in der vorbestimmten Richtung abgestrahlt.

Solange die Grenzbedingungen für die Totalreflexion an der reflektierenden Deckfläche des Lichtaustrittselementes eingehalten werden, läßt sich der Neigungswinkel dieser Deckfläche gegenüber der optischen Achse des Lichtaustrittselementes selbst frei wählen. Weiterhin ist im Rahmen der erfindungsgemäßen Losung eine Vielzahl von Lichtcharakteristiken realisierbar. Durch entsprechende Ausbildung der reflektierenden Deckfläche des Lichtaustrittselementes als plane Fläche oder als sphärische Fläche konkaver bzw. konvexer Form hat man es in der Hand, dem Anwendungsfall angepaßt, eine mehr gleichmäßig aufgefächerte, stärker breitstrahlende bzw. mehr gebündelte Lichtcharakteristik zu realisieren. Da das Lichtaustrittselement relativ einfach auswechselbar zu gestalten und vorzugsweise über ein Sackloch in seiner Grundfläche auf das abisolierte Ende der Lichtleitfaser aufgeschoben ist, lassen sich individuelle Lösungen bei der Montage unmittelbar vor Ort erzielen bzw. auch Änderungen durchführen, falls die Anforderungen an die Lichtverteilung wechseln.

Vorteilhaft läßt sich dabei für die zweckmäßige Verteilung des über das Lichtaustrittselement austretenden, auf eine Nutzebene gerichteten Lichtes die Tatsache ausnutzen, daß bei faseroptischen Beleuchtungseinrichtungen keine Einschränkungen über die Einbaulage gegeben sind. Dazu kommt hinzu, daß gegebenenfalls. auch die Verformbarkeit der in einem Kunststoffmantel geschützten Lichtleitfaser ausgenutzt werden kann, um bei ein und demselben Typ von Lichtaustrittselementen unterschiedliche Abstrahlrichtungen bei dann an sich unveränderter Lichtverteilung zu realisieren. Schließlich ist es denkbar, in das Lichtaustrittselement eine Schalteinrichtung zu integrieren, indem man die beschriebene Art der Ankopplung des Lichtaustrittselementes ausnutzt Bei feststehendem Ende der Lichtleitfaser kann eine dazu relative Bewegung des Lichtaustrittselementes eine Schaltfeder betätigen, mit der in radialer Richtung zur optischen Achse des Lichtaustrittselementes eine Abblendscheibe in den Strahlengang einschiebbar bzw. bei Wiederholung der Axialbewegung des Lichtaustrittselementes wieder aus dem Strahlengang auslenkbar ist.

Ausführungsbeispiele der Erfindung werden im folgenden anhand der Zeichnung näher beschrieben. Dabei zeigt:
- Figur 1: eine schematische Darstellung des an sich bekannten Aufbauprinzipes faseroptischer Beleuchtungseinrichtungen in Verbindung mit einem erfindungsgemäß ausgebildeten Lichtaustrittselement,
- Figur 2: eine Ausführungsform dieses Lichtaustrittselementes im Detail,
- Figur 3, 4: zwei weitere Ausführungsformen dieses Lichtaustrittselementes, wobei sich diese in der Ausgestaltung einer reflektierenden Deckfläche unterscheiden,
- Figur 5: eine Ausführungsform des Lichtaustrittselementes, bei der für dessen Anordnung die Verformbarkeit der durch einen elastischen Mantel geschützten Lichtleitfaser ausgenutzt wird,
- Figur 6: eine weitere Ausführungsform, bei dem das Lichtaustrittselement im Bezug auf eine Montagewand, beispielsweise eine Raumdecke in einer horizontalen Einbaulage dargestellt ist.

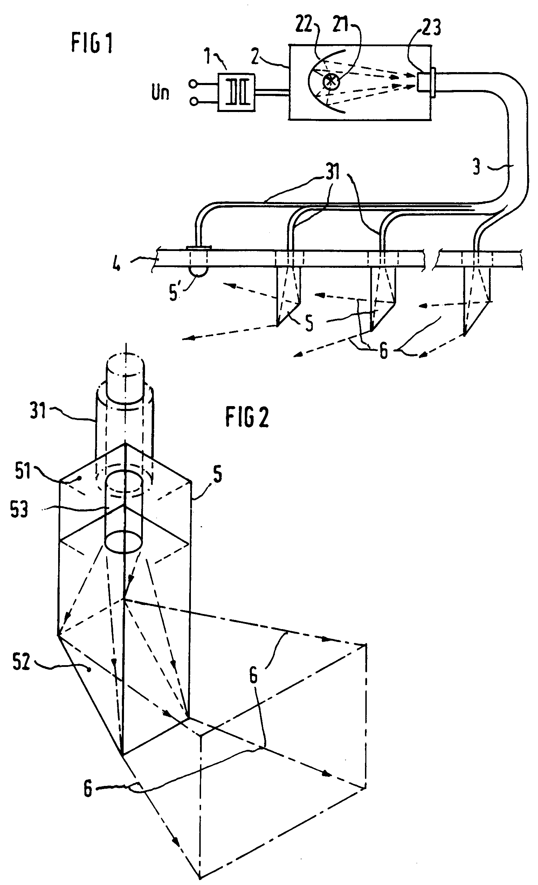

Das in Figur 1 dargestellte Aufbauschema für eine faseroptische Beleuchtungseinrichtung besitzt einen Transformator 1, der an Netzspannung Un angeschlossen ist und diese auf eine Kleinspannung, beispielsweise 12 Volt ausgangsseitig herabsetzt. Diese Kleinspannung wird einer Lichtquelleneinheit 2 als Versorgungsspannung zugeführt. In der Lichtquelleneinheit ist eine leistungsstarke Lichtquelle, beispielsweise eine Halogenlampe 21 angeordnet, die einseitig teilweise von einem umfaßt wird. Vorzugsweise ist dieser Reflektor 22 als sogenannter Kaltlichtreflektor ausgebildet, das heißt er ist für Wärmestrahlung im Infrarotbereich teildurchlässig, reflektiert aber den kurzwelligen Lichtstromanteil des von der Lichtquelle 21 ausgestrahlten Lichtes in Richtung auf einen Faserkopf 23, dessen der Lichtquelle 21 sowie dem Reflektor 22 zugekehrte Lichteintrittsfläche das lampenseitige Ende eines Lichtleiterbündels 3 bestehend aus einer Mehrzahl von einzelnen Lichtleitfasern 31 bildet. Über diese Lichtleitfasern 31 wird das von der Lichtquelle 21 abgestrahlte und über den Faserkopf 23 eingekoppelte Licht an einzelne, jeweils einer der Lichtleitfasern 31 zugeordnete Lichtaustrittspunkte transportiert. Auf diesem Transportweg wird durch Absorption des kurzwelligen Lichtstromanteiles auch UV-Strahlung aus dem Licht ausgefiltert. An den Lichtaustrittspunkten sind die von der Lichtquelle 21 entfernten Enden der Lichtleitfasern 31, in Befestigungselementen aufgenommen, in Durchbrüchen durch eine Montagefläche 4 festgelegt und dabei an ein Lichtaustrittselement 5 angekoppelt.

Beispielhaft ist in Figur 1 gezeigt, daß Lichtaustrittselemente 5' konventionell linsenförmig ausgebildet sein können, im vorliegenden Fall wesentlich aber und davon abweichend ist ein erfindungsgemäßes Lichtaustrittselement 5 von quaderförmiger Gestalt, und dessen Längsachse als optische Achse 50 senkrecht zu der Lichtaustrittsfläche der zugeordneten Lichtleitfaser 31 steht.

In den Figuren 2, 3 bzw. 4 sind detaillierter unterschiedliche Ausführungsformen für die hier wesentliche Form der Austrittselemente 5 dargestellt. Gemeinsam ist ihnen der an das entfernte Ende der Lichtleitfaser 31 koaxial mit seiner Grundfläche 51 koaxial angesetzte quaderförmige Körper aus einem kristallinen, möglichst gleichmäßig transluzentem Material, in dem sich das über die Lichtleitfaser 31 eingekoppelte Licht gerichtet bei einem lediglich geringen Anteil diffuser Strahlung ausbreitet.

Ein wesentliches Merkmal der hier vorliegenden Lichtaustrittselemente 5 ist eine schräg zur optischen Achse 50 geneigte Deckfläche 52. Insbesondere diese ist als Grenzfläche zur Umgebung des Lichtaustrittselementes 5 fein poliert und gegenüber der optischen Achse 50 so geneigt, daß für das auf sie auffallende Licht der Grenzwinkel der Totalreflexion überschritten ist. Daher werden beispielhaft eingezeichnete Lichtstrahlen 6 zunächst im Inneren des Lichtaustrittselementes an der Deckfläche 52 reflektiert und treten quer zur optischen Achse 50 seitlich aus dem Lichtaustrittselement 5 aus. Um das aus der Lichtleitfaser 31 austretende Licht möglichst einfach und dabei verlustlos in das Lichtaustrittselement 5 einzukoppeln, ist in dessen Grundfläche 51, koaxial zur optischen Achse 50, eine Sacklochbohrung 53 eingelassen, deren Durchmesser dem der abisolierten Lichtleitfaser 31 entspricht.

Wie die Beispiele von Figur 2, 3 und 4 zeigen, hat man es durch Ausgestaltung der Deckfläche 52 in der Hand, bestimmte Lichtverteilungen für das so ausgestrahlte Licht zu erzielen. In Figur 2 ist die Deckfläche 52, den quaderförmigen Körper des Lichtaustrittselementes 5 schräg abschneidend, als plane Fläche ausgebildet. Auf diese Weise wird der geringe Streuwinkel des auf die gesamte Deckfläche 52 fallenden Lichtbündels gleichmäßig erweitert und ergibt ein aufgefächertes abgestrahltes, schematisch in strichpunktierten Linien dargestelltes Lichtbündel.

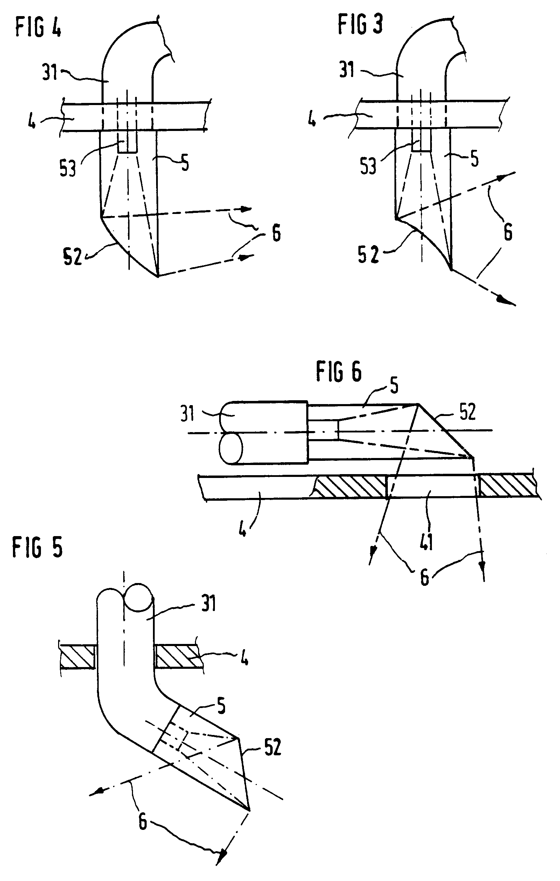

Wie Figur 3 zeigt, läßt sich dieser Effekt der Auffächerung des Lichtbündels zu einer breit strahlenden Charakteristik noch verstärken, indem man die Deckfläche 52 - in Richtung der Lichtausbreitung längs der optischen Achse 50 betrachtet - als konvexe sphärische Fläche ausbildet. Umgekehrt ist in Figur 4 gezeigt, daß sich eine gebündelte Lichtverteilung mit einer konkav gewölbten Deckfläche 52 erzielen läßt.

Figur 5 zeigt schematisch, daß es unter Anwendung dieses Prinzips auch möglich ist, die Hauptausstrahlungsrichtung des Lichtelementes 5 gegebenen Anwendungsfällen anzupassen, wenn man die Verformbarkeit der Lichtleitfaser 31 ausnutzt. In dieser Darstellung ist lediglich das Prinzip wiedergegeben. Es ist ohne weiteres vorstellbar, wie sich dieses Prinzip ausnutzend eine konkrete Ausführungsform konstruktiv ausgestalten läßt. Fur den Fachmann gibt es dafür eine Fülle von an sich bekannten Lösungen zur schwenkbaren Lagerung von Strahlern und ähnlichem, die hier angepaßt einsetzbar sind.

In Figur 6 ist schließlich eine weitere Ausführungsform für eine Montagemöglichkeit dargestellt, bei der das Lichtaustrittselement 5 im Inneren der Montagefläche 4 in einer im wesentlichen horizontalen Einbaulage angeordnet ist und das durch die Lichtstrahlen 6 schematisch angedeutete austretende Lichtbündel durch eine Öffnung 41 in der Montagefläche 4 hindurch auf eine Nutzebene nach unten abgestrahlt wird.

### Bezugszeichenliste

- 1: Transformator
- Un: Netzspannung
- 2: Lichtquelleneinheit
- 21: Halogenlampe
- 22: Reflektor
- 23: Faserkopf
- 3: Lichtleiterbündel
- 31: Lichtleitfasern
- 4: Montagefläche
- 41: Öffnung von 4
- 5: Lichtaustrittselement
- 5': konventionelles Lichtaustrittselement
- 50: optische Achse von 5
- 51: Grundfläche von 5
- 52: Deckfläche von 5
- 53: Sacklochbohrung von 5
- 6: Lichtstrahlen

## Patentansprüche

1. Faseroptische Beleuchtungseinrichtung mit einer Lichtquelleneinheit (2) bestehend aus einer Lichtquelle (21), einem diese teilweise umfassenden Reflektor (22) sowie einem dem Reflektor zugekehrten Faserkopf (23), mit mindestens einer Lichtleitfaser (31), bei der eines ihrer beiden Enden als Lichtaufnahmefläche in den Faserkopf integriert ist und am anderen, entfernten Ende ein Lichtaustrittselement (5) angeordnet ist, **dadurch gekennzeichnet,** daß das Lichtaustrittselement (5) quaderförmig und transluzent ausgebildet ist, eine dem entfernten Ende der Lichtleitfaser zugewandte Grundfläche (51) und dieser in einer Längsachse (50) des Lichtaustrittselementes gegenüberliegend eine total reflektierend ausgebildete, in bezug auf die Längsachse geneigte Deckfläche (52) aufweist, an der in das Lichtaustrittselement eingekoppeltes Licht reflektiert wird und seitlich aus dem Lichtaustrittselement austritt.

2. Faseroptische Beleuchtungseinrichtung nach Anspruch 1, **dadurch gekennzeichnet,** daß in die Grundfläche (51) des Lichtaustrittselementes (5), koaxial mit dessen optischer Achse (50), eine Sacklochbohrung (53) eingelassen ist, deren Duchmesser dem der abisolierten Lichtleitfaser (31) entspricht und in die das entfernte Ende der Lichtleitfaser eingesetzt ist.

3. Faseroptische Beleuchtungseinrichtung nach Anspruch 1 oder 2, **dadurch gekennzeichnet,** daß die Deckfläche (52) des Lichtaustrittselementes (5) plan ausgebildet ist.

4. Faseroptische Beleuchtungseinrichtung nach Anspruch 1 oder 2, **dadurch gekennzeichnet,** daß die Deckfläche (52) des Lichtaustrittselementes (5) sphärisch gewölbt ausgebildet ist.

5. Faseroptische Beleuchtungseinrichtung nach Anspruch 4 , **dadurch gekennzeichnet,** daß die Deckfläche (52) des Lichtaustrittselementes (5), in Lichtausbreitungsrichtung betrachtet, konvex ausgebildet ist.

6. Faseroptische Beleuchtungseinrichtung nach Anspruch 4 , **dadurch gekennzeichnet,** daß die Deckfläche (52) des Lichtaustrittselementes (5), in Lichtausbreitungsrichtung betrachtet, konkav ausgebildet ist.

7. Faseroptische Beleuchtungseinrichtung nach einem der Ansprüche 1 bis 6, **dadurch gekennzeichnet,** daß das entfernte Ende der Lichtleitfaser (31) mit dem angekoppelten Lichtaustrittselement (5) in Richtung einer Nutzebene weisend in einer Durchtrittsöffnung einer Monatagefläche (4) befestigt ist.

8. Faseroptische Beleuchtungseinrichtung nach Anspruch 7, **dadurch gekennzeichnet,** daß das entfernte Ende der Lichtleitfaser (31) mit dem angekoppelten Lichtaustrittselement (5) in der Durchtrittsöffnung der Monatagefläche (4) schwenkbar angeordnet ist.

9. Faseroptische Beleuchtungseinrichtung nach einem der Ansprüche 1 bis 6, **dadurch gekennzeichnet,** daß das entfernte Ende der Lichtleitfaser (31) mit dem angekoppelten Lichtaustrittselement (5) über einer Öffnung (41) einer Montagefläche (4) derart befestigt ist, daß das von dem Lichtaustrittselement (5) abgestrahlte Licht durch diese Öffnung hindurch auf eine unter der Montagefläche (4) liegende Nutzebene abgestrahlt wird.

10. Faseroptische Beleuchtungseinrichtung nach einem der Ansprüche 1 bis 9, **dadurch gekennzeichnet,** daß in das Lichtaustrittselement (5) ein Zug/Druckschalter integriert ist, mit dem sich der Lichtaustritt an- bzw. abschalten läßt.
